# EUROPEAN PATENT APPLICATION

(11) **EP 3 689 776 A1**
(43) Date of publication of application: **05.08.2020**
(21) Application number: 18863210.3
(22) Date of filing: 27.09.2018
(51) Int. Cl.: B65D 65/40, B32B 27/00, B32B 27/28

(54) **PACKAGING MATERIAL AND PACKAGING BAG USING SAME**

(30) Priority: 28.09.2017 JP 2017188762
(71) Applicant: Toyo Aluminium Kabushiki Kaisha, Osaka-shi, Osaka 541-0056 (JP)
(72) Inventor: TERASAWA, Yuya, Osaka-shi Osaka 541-0056 (JP); KANNO, Keiichi, Osaka-shi Osaka 541-0056 (JP); KUBO, Hiroshi, Osaka-shi Osaka 541-0056 (JP); ISHII, Hiroki, Osaka-shi Osaka 541-0056 (JP); NAKANISHI, Ryota, Tokyo 101-8336 (JP)
(74) Representative: Nieuwenhuys, William Francis
(86) International application number: PCT/JP2018/035923
(87) International publication number: WO 2019/065835

(57) **Abstract**

The present invention provides a packaging material that allows for lesser adsorption of a medicinal component on the material, that can be processed into a packaging pouch without using an adhesive, and that has excellent tearability. Specifically, the present invention provides a packaging material including, on or above one or both surfaces of a substrate, a primer layer and a low-adsorption coating layer with a grammage of 0.5 to 20 g/m² in this order, wherein the primer layer contains an acid-modified product of a block copolymer that contains a block A containing a structural unit derived from an aromatic vinyl compound, and a block B containing a structural unit derived from a conjugated diene compound and/or an acid-modified product of a hydrogenated product of the block copolymer; and the low-adsorption coating layer contains a cyclic polyolefin.

## Description

### Technical Field

The present invention relates to a packaging material, and a packaging pouch using the packaging material.

### Background Art

A packaging material containing polyacrylonitrile (PAN) that hardly allows medical agents to adsorb thereon is typically used in packaging materials for packing highly absorbed medical agents, such as transdermal drugs. For example, PTL 1 discloses a packaging pouch that has an adhesion-preventing layer, such as a polyacrylonitrile film, on the inner surface thereof.

However, manufacturing a packaging pouch using a polyacrylonitrile film requires that the polyacrylonitrile film be bonded to a substrate such as aluminum foil or polyethylene terephthalate, using an adhesive. This results in an increased number of manufacturing steps and increased cost, as compared with the use of a lacquer sealant or a hot-melt sealant. Additionally, the medicinal component contained in a pharmaceutical preparation is easily adsorbed to the adhesive used in forming the packaging pouch.

Additionally, the polyacrylonitrile film is inferior in tearability to other packaging materials, such as polyethylene terephthalate films, thus making it difficult to open the packaging pouch.

Thus, there is demand for a packaging material that allows for lesser adsorption of a medicinal component contained in a packaged pharmaceutical preparation on the material, that can be processed into a packaging pouch by sealing the packaging material without using an adhesive, and that has excellent tearability.

### Citation List

### Patent Literature

PTL 1: JP2005-328928

### Summary of Invention

### Technical Problem

In view of the circumstances described above, an object of the present invention is to provide a packaging material that allows for lesser adsorption of a medicinal component on the material, that can be processed into a packaging pouch without using an adhesive, and that has excellent tearability.

### Solution to Problem

The present inventors conducted extensive research to achieve the object, and found that a packaging material that allows for lesser adsorption of a medicinal component contained in a pharmaceutical preparation on the material, that can be processed into a packaging pouch without using an adhesive, and that has excellent tearability, can be obtained when using a cyclic polyolefin in a low-adsorption coating layer; and using an acid-modified product of a block copolymer that contains a block containing a structural unit derived from an aromatic vinyl compound and a block containing a structural unit derived from a conjugated diene compound as a primer layer for adhering, for example, metal foil that serves as a substrate to the low-adsorption coating layer and/or an acid-modified product of a hydrogenated product of the block copolymer. The inventors conducted further research on the basis of this finding, and completed the present invention.

Specifically, the present invention provides the following packaging material and packaging pouch.
Item 1. A packaging material comprising, on or above one or both surfaces of a substrate, a primer layer and a low-adsorption coating layer with a grammage of 0.5 to 20 g/m² in this order, wherein
   the primer layer contains
   an acid-modified product of a block copolymer that contains a block A containing a structural unit derived from an aromatic vinyl compound and a block B containing a structural unit derived from a conjugated diene compound and/or
   an acid-modified product of a hydrogenated product of the block copolymer; and
   the low-adsorption coating layer contains a cyclic polyolefin.
Item 2. The packaging material according to Item 1, wherein the cyclic polyolefin is at least one member selected from the group consisting of cycloolefin copolymers and cycloolefin polymers.
Item 3. The packaging material according to Item 1 or 2, wherein the primer layer further contains a cyclic polyolefin.
Item 4. A packaging pouch comprising the packaging material of any one of Items 1 to 3.
Item 5. The packaging pouch according to Item 4, comprising a freely openable zipper portion.

### Advantageous Effects of Invention

The packaging material according to the present invention allows for lesser adsorption of a medicinal component on the material, can be processed into a packaging pouch without using an adhesive, and has excellent tearability.

### Brief Description of Drawings

Fig. 1 is a schematic diagram of the packaging material of Example 1.
Fig. 2 is a schematic diagram of the packaging material of Comparative Example 1.
Fig. 3 is a schematic diagram of a test specimen in an evaluation test for face-to-face heat-sealing properties.

### Description of Embodiments

The packaging material according to the present invention comprises, on or above one or both surfaces of a substrate, a primer layer and a low-adsorption coating layer with a grammage of 0.5 to 20 g/m² in this order, wherein the primer layer contains an acid-modified product of a block copolymer that contains a block A containing a structural unit derived from an aromatic vinyl compound (an aromatic vinyl monomer unit), and a block B containing a structural unit derived from a conjugated diene compound (a conjugated diene monomer unit) and/or an acid-modified product of a hydrogenated product of the block copolymer; and the low-adsorption coating layer contains a cyclic polyolefin.

### Substrate

The substrate can be any substrate usable as a substrate for packaging materials. For example, metal foil, metal foil with a resin layer on one surface, or a resin substrate on which a metal deposition film is deposited can be suitably used.

The metal component for use in the metal foil or metal deposition film can be any metal component, and a wide range of known metal components for use in packaging materials are usable. Specifically, the metal for use can be at least one member selected from the group consisting of aluminum, copper, and stainless steel. These metals may be a pure metal composed of only one component, or an alloy containing multiple components.

The metal foil for use as a substrate is, of the metals describe above, preferably an aluminum foil, from the standpoint of excellent barrier properties and artistry. The thickness of the metal foil is not particularly limited. For example, the thickness of the metal foil is preferably 5 to 200 µm.

When an aluminum foil is used as the metal foil, the aluminum that constitutes the aluminum foil preferably has a purity of 99% or more. The impurities contained in the aluminum foil are also not particularly limited, and may be one or more additive elements selected from the group consisting of iron, silicon, manganese, magnesium, copper, zinc, and tin, depending on the desired performance.

When a metal foil provided with a resin layer on one surface thereof is used as a substrate, the resin that constitutes the resin layer for use is preferably a polyester resin; of polyester resins, polyethylene terephthalate is particularly preferable. The purity and composition of the polyethylene terephthalate are not particularly limited. The thickness of the resin layer formed from polyethylene terephthalate is also not particularly limited. However, from the standpoint of printing on the resin layer, workability in the lamination step, and ease of tearing apart for the user, it is preferable to set the thickness of the resin layer to 6 to 38 µm. In this case, the primer layer and low-adsorption coating layer, described later, are preferably configured such that the resin layer, the metal foil, the primer layer, and the low-adsorption coating layer are provided in this order.

A technique for providing the resin layer on the metal foil is, for example, adhering the resin layer to the foil via a known adhesive. The surface on which the resin layer is provided is opposite the packaged product (e.g., a pharmaceutical preparation) in the packaging material according to the present invention via the metal foil. Thus, there is no need for concern about adsorption of the packaged product to the adhesive.

When a substrate provided with a metal deposition film on a resin substrate is used, the resin substrate is preferably a polyester resin, and particularly preferably polyethylene terephthalate. The purity and composition of the polyethylene terephthalate are not particularly limited. The thickness of the resin substrate is also not limited. However, from the standpoint of ease of printing, excellent workability in the lamination step, and ease of tearing apart for the user, the thickness of the resin substrate is, for example, preferably 6 to 38 µm. In this case, the primer layer and low-adsorption coating layer, described later, are preferably configured such that the resin substrate, the metal deposition film, the primer layer, and the low-adsorption coating layer are provided in this order.

### Primer Layer

The primer layer is present between the substrate and the low-adsorption coating layer, described later, and plays a role in adhering the substrate to the low-adsorption coating layer. The primer layer contains an acid-modified product of a block copolymer that contains a block A containing a structural unit derived from an aromatic vinyl compound, and a block B containing a structural unit derived from a conjugated diene compound and/or an acid-modified product of a hydrogenated product of the block copolymer (simply, "modified SBC" below).

The block copolymer is a block copolymer that contains a block A containing a structural unit derived from an aromatic vinyl compound, and a block B containing a structural unit derived from a conjugated diene compound. The hydrogenated product thereof is a block copolymer obtained by hydrogenating the block copolymer. Examples include block copolymers that contain a structure such as A-B, A-B-A, B-A-B-A, and A-B-A-B-A; and those obtained by hydrogenating the block copolymers.

The block A containing a structural unit derived from an aromatic vinyl compound may be a homopolymer block consisting of a structural unit derived from an aromatic vinyl compound; or a block containing 50 mass% or more, preferably 70 mass% or more of a structural unit derived from an aromatic vinyl compound and an optional component. Examples of the optional component include copolymer blocks of a block copolymer and/or a random copolymer that are both formed of a structural unit derived from a conjugated diene compound.

The aromatic vinyl compound is a polymerizable monomer that contains a polymerizable carbon-carbon double bond and an aromatic ring. Examples of the aromatic vinyl compound include styrene, t-butylstyrene, α-methylstyrene, p-methylstyrene, divinylbenzene, 1,1-diphenylstyrene, N,N-diethyl-p-aminoethyl styrene, vinyltoluene, and p-tert-butylstyrene. These aromatic vinyl compounds may be used singly, or in a combination of two or more.

The block B containing a structural unit derived from a conjugated diene compound may be a homopolymer block consisting of a structural unit derived from a conjugated diene compound; or a block containing 50 mass% or more, preferably 70 mass% or more of a structural unit derived from a conjugated diene compound and an optional component. Examples of the optional component include copolymer blocks of a block copolymer and/or a random copolymer that are both formed of a structural unit derived from an aromatic vinyl compound.

The conjugated diene compound is a polymerizable monomer that contains two carbon-carbon double bonds connected through one carbon-carbon single bond. Examples of the conjugated diene compound include 1,3-butadiene, isoprene(2-methyl-1,3-butadiene), 2,3-dimethyl-1,3-butadiene, and chloroprene(2-chloro -1,3-butadiene). These conjugated diene compounds may be used singly, or in a combination of two or more.

From the standpoint of heat resistance, the hydrogenation rate of a hydrogenated product of the block copolymer (the ratio of the number of carbon-carbon single bonds generated by hydrogenation to the number of carbon-carbon double bonds in the block copolymer before hydrogenation) is preferably 50% or more, more preferably 80% or more, and still more preferably 90% or more. The upper limit of the hydrogenation rate can be any limit, and may be 100%.

Specific examples of the block copolymer and/or a hydrogenated product thereof include SBS (a styrene-butadienestyrene block copolymer), SIS (a styrene-isoprene-styrene block copolymer), SEBS (hydrogenated SBS), SEPS (hydrogenated SIS), SOE (Asahi Kasei Chemicals Corporation), and HYBRAR (Kuraray Co., Ltd). One or more of these members may be used.

The acid-modified product contained in the packaging material according to the present invention is one obtained by modifying the block copolymer or hydrogenated product described above with an acid component.

Examples of the acid component include unsaturated carboxylic acids, and derivatives of unsaturated carboxylic acids. Examples of unsaturated carboxylic acids include maleic acid, itaconic acid, fumaric acid, acrylic acid, and methacrylic acid. Examples of derivatives of unsaturated carboxylic acids include alkyl acrylates, such as maleic acid monoester, maleic acid diester, maleic anhydride, itaconic acid monoester, itaconic acid diester, itaconic anhydride, fumaric acid monoester, fumaric acid diester, fumaric anhydride, and methyl acrylate; and alkyl methacrylates, such as methyl methacrylate. One or more of these members may be used as an acid component.

The acid-modified product of the block copolymer and/or the acid-modified product of a hydrogenated product of the block copolymer is preferably present in an amount of 10 to 100 mass% in 100 mass% of the primer layer.

The primer layer may contain a resin component (e.g., a cyclic polyolefin, or a polyolefin contained in known primers) and additives, depending on the intended use of the packaging material and required properties. When the primer layer contains a cyclic polyolefin or a polyolefin, the acid-modified product of a block copolymer and/or the acid-modified product of a hydrogenated product of the block copolymer is preferably present in an amount of 10 mass% or more and less than 100 mass%, and preferably 50 mass% or more and less than 100 mass%, in 100 mass% of the primer layer. This configuration enables the packaging material to have excellent heat-sealing properties.

Examples of the resin component and additives include TOPAS COC, which is a cyclic polyolefin copolymer produced by Polyplastics Co., Ltd.; Sumikathene, which is a polyolefin produced by Sumitomo Chemical Co., Ltd.; and EVAFLEX, which is a polyolefin (an ethylene-vinyl acetate copolymer) produced by Mitsui Du Pont Polychemicals.

The method for forming the primer layer can be any method. The primer layer can be formed by dissolving a resin for use in the primer layer in a solvent to prepare a coating agent, and applying the coating agent on the surface of a substrate suitably using a known method, such as roll coating, various types of gravure coating, bar coating, doctor blade coating, comma coater, part coating, electrostatic powder coating, spraying, or brush coating.

The solvent for use in forming the primer layer can be any solvent. Examples include toluene, xylene, cyclohexane, benzene, and n-pentane. When the block copolymer is dissolved in the solvent, the concentration of the block copolymer can be suitably determined in accordance with coating suitability and the thickness of the coating film.

The primer layer preferably has a grammage of 0.5 g/m² or more and 5.0 g/m² or less. A primer layer with a grammage within this numerical range can provide excellent low-adsorption properties. In this specification, the "grammage of a primer layer" refers to the grammage of a dried primer layer free of volatile components. The grammage of a dried primer layer can be determined by forming a primer layer on a substrate whose mass per unit area is known beforehand; drying the layer; trimming the dried layer with the substrate into a piece (height 10 cm × width 10 cm); identifying the difference in mass between before and after wiping off the primer layer with a solvent; and converting the difference in mass into a grammage.

### Low-Adsorption Coating Layer

The low-adsorption coating layer is a layer stacked on the surface of the primer layer, and is in the form of a "film." When the packaging material according to the present invention is formed into a packaging pouch, the low-adsorption coating layer is on the inner side of the packaging pouch, and is a layer that comes into contact with the packaged product.

The low-adsorption coating layer contains a cyclic polyolefin. The cyclic polyolefin is resistant to adsorption of components contained in the packaged product, and is thus capable of preventing the components from adsorbing to the primer layer or the metal foil of the packaging material.

The type of the cyclic polyolefin contained in the low-adsorption coating layer can be any type. For example, the cyclic polyolefin is preferably at least one member of cycloolefin copolymers (simply "COC" below) and cycloolefin polymers (simply "COP" below).

COC refers to a polymer obtained by copolymerizing a cyclic olefin monomer, such as norbornene, with a monomer copolymerizable with a cyclic polyolefin, such as ethylene, in the presence of a metallocene catalyst. The cyclic olefin monomer is preferably present in an amount of 60 to 85 mass% in COC. For COC, a resin with a glass-transition point (Tg) of 60 to 180°C is preferably used.

COP refers to a polymer obtained by subjecting a cyclic olefin monomer, such as norbornene, to ring-opening metathesis polymerization, and further hydrogenating the resulting product. For COP, a resin with a glass-transition point (Tg) of 60 to 180°C is preferably used. The glass-transition point of COP can be adjusted by altering the amount of norbornene within the range described above.

Cyclic olefin monomers for use in COC and COP include cyclobutene, cyclopentene, cyclopentadiene, norbornene (bicyclo[2.2.1]hept-2-ene), dicyclopentadiene (tricyclo[4.3.0.12,5]deca-3,7-diene), tetracyclododecene (tetracyclo[4.4.0.12,5.17,10]dec-3-ene), and derivatives thereof. The cyclic olefin monomer for use is preferably at least one member selected from the group consisting of norbornene and derivatives thereof.

Monomers copolymerizable with cyclic polyolefins for use in COC include α-olefins, such as ethylene, propylene, 1-butene, and 1-pentene; and non-conjugated dienes, such as 1,4-hexadiene, 4-methyl-1,4-hexadiene, 5-methyl-1,4-hexadiene, and 1,7-octadiene. A monomer copolymerizable with a cyclic polyolefin for use is preferably an α-olefin having 2 to 8 carbon atoms.

The low-adsorption coating layer may contain additives, such as an anti-blocking agent, an antistatic agent, and a surfactant, depending on the intended use of the packaging material and other required properties. The amount of the additives may be suitably determined, for example, according to the purpose of use of the additives.

The method for forming the low-adsorption coating layer can be any method. The low-adsorption coating layer can be formed by suitably dissolving a resin for use in the primer layer in a solvent to prepare a coating agent, and applying the coating agent on the surface of the primer layer suitably using a known method, such as roll coating, various types of gravure coating, bar coating, doctor blade coating, comma coater, part coating, electrostatic powder coating, spraying, or brush coating.

The solvent for use in forming the low-adsorption coating layer can be any solvent. Examples include toluene, xylene, cyclohexane, benzene, and n-pentane. When the cyclic polyolefin is dissolved in the solvent, the concentration of the cyclic polyolefin can be suitably determined in accordance with coating suitability and the thickness of the coating film.

The low-adsorption coating layer is provided so as to have a grammage of 0.5 g/m² or more and 20 g/m² or less. A low-adsorption coating layer with a grammage of less than 0.5 g/m² is likely to allow the medicinal component to adsorb to the layer; while a low-adsorption coating layer with a grammage of more than 20 g/m² may lead to loss of flexibility, which may possibly generate cracks in the low-adsorption coating layer when the packaging material is folded. A low-adsorption coating layer with a grammage of 10 g/m² or less is more preferable because such a low-adsorption coating layer exhibits excellent coating suitability, and does not allow the medicinal component to adsorb into the low-adsorption coating layer.

In this specification, the "grammage of a low-adsorption coating layer" refers to the grammage of a dried low-adsorption coating layer free of volatile components. The grammage of a dried low-adsorption coating layer can be determined by forming a primer layer whose grammage is known beforehand and a low-adsorption coating layer on a substrate whose mass per unit area is known beforehand; drying the layers; trimming the dried layers with the substrate into a piece (height 10 cm × width 10 cm); subtracting the mass of the primer layer from the difference in mass between before and after wiping off the primer layer and low-adsorption coating layer with a solvent; and converting the result into a grammage.

The configuration described above can provide a packaging material that allows for lesser adsorption of a medicinal component on the material, that can be sealed without using another adhesive for sealing, and that has excellent tearability.

Packaging Pouch

The packaging material formed into a pouch to serve as a packaging pouch can be used in packaging a variety of contents. The shape of the packaging pouch can be any shape. The packaging material can be formed into a variety of shapes, such as a fin seal pouch prepared by folding a single sheet of a packaging material into a pouch, and sealing it in the middle of the back; a gusset pouch prepared by folding a single sheet of a packaging material into a pouch, and sealing it in the middle of the back with gussets provided on the sides; a side-sealed pouch prepared by fusing both sides of the pouch (thermocompression bonding and cutting are performed simultaneously with a hot knife); a two-side-sealed pouch prepared by folding a single sheet of a packaging material in half, and sealing both sides with the folded part as the bottom; a bottom gusset pouch prepared by providing a gusset on the bottom of this two-side-sealed pouch; a stand-up zipper pouch prepared by providing this bottom gusset pouch with a zipper; a three-side-sealed pouch prepared by pasting two sheets of a packaging material at the three sides (the bottom, and both sides); a three-side-sealed zipper pouch prepared by providing this three-side-sealed pouch with a zipper; a stand-up pouch prepared by forming the bottom into a round shape, so as to have self-standing properties (standing properties); and a bottom-sealed pouch prepared by cutting a tubular material in the length for a pouch, and welding the bottom of the material by thermal sealing.

At least a portion of the packaging pouches described above preferably has a freely openable zipper portion. Due to this configuration, even when a partially used content remains inside the pouch, the components of the content can be prevented from escaping into open air. The structure of the zipper portion can be any structure; a known re-sealable zipper may be used.

Embodiments of the present invention are described above. However, the present invention is not limited to these embodiments, and various embodiments may be made without departing from the spirit and principal concept of the invention.

### Examples

The following describes embodiments of the present invention in more detail, with reference to Examples. However, the present invention is not limited to these embodiments.

### Example 1

### (1) Preparation of Substrate

A sheet was prepared that included a commercially available 12 µm-thick twin-screw-stretched polyethylene terephthalate film (PET) on one surface of 20 µm-thick aluminum foil (1N30) (Toyo Aluminium K.K.) via a polyurethane-based dry laminate adhesive (a grammage of 3.5 g/m² after drying). This sheet had a total thickness of about 35 µm.

### (2) Lamination of Primer Layer

90 parts by mass of a solvent (toluene) was added to 10 parts by mass of OGMER pellets (EZB9173P, Riken Technos Corporation), which are modified SBC; and the pellets were dissolved with stirring in a hot-water bath at 60°C, thereby preparing a primer coating agent. This primer coating agent was applied to the surface of the sheet on which PET was not laminated (the aluminum foil side) using a bar coater so as to give a grammage of 0.5 g/m² after drying. Subsequently, the laminate was dried by heating in an oven at 200°C for 10 seconds to evaporate off toluene, thereby obtaining a laminate that contains a primer layer, aluminum foil, and PET in sequence.

### (3) Lamination of Low-Adsorption Coating Layer

90 parts by mass of a solvent (toluene) was added to 10 parts by mass of TOPAS 8007F-40 pellets (Polyplastics Co., Ltd.), which are COC; and the pellets were dissolved with stirring in a hot-water bath at 60°C, thereby preparing a low-adsorption coating agent. This low-adsorption coating agent was applied to the surface of the primer layer of the laminate using a bar coater so as to give a grammage of 0.5 g/m² after drying. Subsequently, the laminate was dried by heating in an oven at 200°C for 10 seconds to evaporate off toluene.

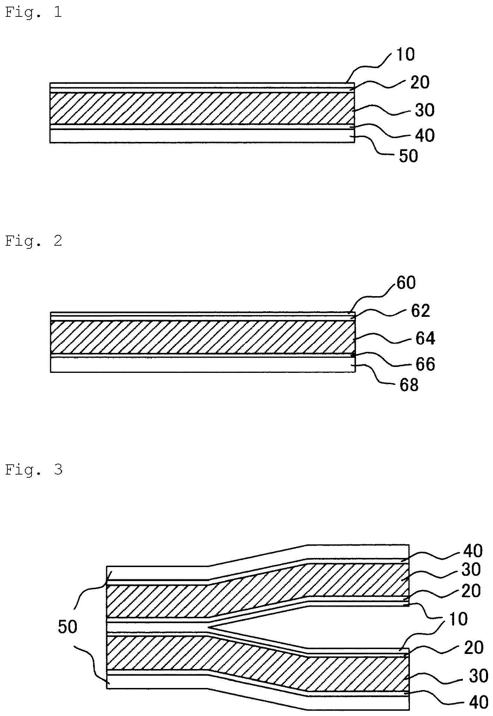

The steps above provided a packaging material in which a COC 10, a primer layer 20, an aluminum foil 30, an adhesive layer 40, and a PET 50 were stacked in sequence, as illustrated in Fig. 1.

### Example 2

The procedure of Example 1 was repeated, except that the low-adsorption coating agent was applied to give a grammage of 3.0 g/m² after drying, thereby obtaining the packaging material of Example 2.

### Example 3

The procedure of Example 1 was repeated, except that the low-adsorption coating agent was applied to give a grammage of 10.0 g/m² after drying, thereby obtaining the packaging material of Example 3.

### Example 4

The procedure of Example 2 was repeated, except that OGMER (EZB9173P, Riken Technos Corporation) pellets, which are modified SBC, and TOPAS 8007F-40 pellets (Polyplastics Co., Ltd.), which are COC, were pelletized in a mass ratio of 70:30; and the prepared pellets were used for the primer coating agent, thereby obtaining the packaging material of Example 4.

### Example 5

The procedure of Example 2 was repeated, except that OGMER (EZB9173P, Riken Technos Corporation) pellets, which are modified SBC, and TOPAS 8007F-40 pellets (Polyplastics Co., Ltd.), which are COC, were pelletized in a mass ratio of 10:90; and the prepared pellets were used for the primer coating agent, thereby obtaining the packaging material of Example 5.

### Example 6

The procedure of Example 2 was repeated, except that OGMER (EZB9173P, Riken Technos Corporation) pellets, which are modified SBC, and EVAFLEX V421 pellets (Mitsui Du Pont Polychemicals), which are a polyolefin, were pelletized in a mass ratio of 70:30; and the prepared pellets were used for the primer coating agent, thereby obtaining the packaging material of Example 6.

### Example 7

The procedure of Example 2 was repeated, except that OGMER (EZB9173P, Riken Technos Corporation) pellets, which are modified SBC, and EVAFLEX V421 pellets (Mitsui Du Pont Polychemicals), which are a polyolefin, were pelletized in a mass ratio of 10:90; and the prepared pellets were used for the primer coating agent, thereby obtaining the packaging material of Example 7.

### Example 8

The procedure of Example 2 was repeated, except that ZEONOR pellets (Zeon Corporation), which are COP, were used for the low-adsorption coating agent, thereby obtaining a packaging material.

### Example 9

The procedure of Example 1 was repeated, except that the low-adsorption coating agent was applied to give a grammage of 15.0 g/m² after drying, thereby obtaining the packaging material of Example 9.

### Comparative Example 1

A packaging material was prepared that contains a 30 µm-thick polyacrylonitrile film (Tamapoly Co., Ltd.) on the aluminum foil surface of the substrate prepared in Example 1 via a polyurethane-based dry laminate adhesive (a grammage of 3.5 g/m² after drying). As illustrated in Fig. 2, the obtained packaging material was configured such that polyacrylonitrile 60, an adhesive 62, an aluminum foil 64, an adhesive 66, and PET 68 were stacked in sequence.

### Comparative Example 2

A packaging material was prepared that contains a 30 µm-thick COC film on the aluminum foil surface of the substrate prepared in Example 1 via a polyurethane-based dry laminate adhesive (a grammage of 3.5 g/m² after drying).

### Comparative Example 3

A packaging material was prepared that contains a 30 µm-thick COP film on the aluminum foil surface of the substrate prepared in Example 1 via a polyurethane-based dry laminate adhesive (a grammage of 3.5 g/m² after drying).

### Comparative Example 4

The procedure of Example 1 was repeated, except that the low-adsorption coating agent was applied to give a grammage of 0.4 g/m² after drying, thereby obtaining a packaging material.

### Comparative Example 5

The procedure of Example 2 was repeated, except that Tuftec (H1052) pellets (Asahi Kasei Corporation), which are SBC (non-modified SBC), were used for the primer coating agent, thereby obtaining a packaging material.

### Comparative Example 6

The procedure of Example 2 was repeated, except that TOPAS 8007F-40 pellets (Polyplastics Co., Ltd.), which are COC, were used for the primer coating agent, thereby obtaining a packaging material.

### Comparative Example 7

The procedure of Example 2 was repeated, except that MF Under Lacquer D1RL (Toyo Ink Co., Ltd), which is a vinyl chloride-vinyl acetate copolymer, was used for the primer coating agent, thereby obtaining a packaging material.

### Comparative Example 8

The procedure of Example 2 was repeated, except that a MF5A/5B treatment solution (Toyo Ink Co., Ltd.), which is an epoxy resin, was used for the primer coating agent, thereby obtaining a packaging material.

The following evaluation tests were performed on the packaging materials obtained in the Examples and Comparative Examples.

### Face-to-Face Heat-Sealing Properties Evaluation Test

The heat-sealing surfaces of each packaging material prepared in the Examples and Comparative Examples were heat-sealed using a hot plate (20 mm × 60 mm) under conditions of 180°C × 3 kg/cm² × 1 second. The heat-sealed packaging material was slit to give a rectangle with a seal width of 15 mm, thereby preparing three test specimens illustrated in Fig. 3 per sample. The test face-to-face heat-seal strength (N/15 mm) of the specimens was measured with an autograph tester (EZ-LX) (Shimadzu Corporation). More specifically, a T-peel test was performed on each sample at a speed of 100 mm/min, and the average load strength at three points of each sample (N/15 mm) was determined. Taking into consideration the face-to-face heat-seal strength of packaging sheets in practical use, a sample with a face-to-face seal strength of 5.0 N/15 mm or more was determined as "A," a sample with a face-to-face seal strength of 3.0 N/15 mm or more and less than 5.0 N/15 mm was determined as "B," and a sample with a face-to-face seal strength of less than 3.0 N/15 mm was determined as "C." Table 1 illustrates the results.

### Evaluation Test of Amount of Adsorbed Medicinal Component

Each packaging material prepared in the Examples and Comparative Examples was trimmed into a piece (height 10 cm × width 10 cm); and folded in half in the middle of the piece such that the low-adsorption coating layer came inside, followed by sealing the material at one short side and the long side with an impulse sealer (Fuji Impulse Co., Ltd. FI-600-10).

Subsequently, 5 mg of tulobuterol (isomer mixture) (Wako Pure Chemical Industries, Ltd.) as a medicinal component was taken and placed in small vials, and the vials were individually placed in the sealing samples. The remaining short side was then sealed with an impulse sealer, thereby encapsulating the tulobuterol. The sealing samples were placed upright in a container to prevent the medicinal component from flowing out of the small vial in each sample.

All of the samples were stored in a thermostatic bath at 50°C for 1 month. The end portion of the upper edge was cut with scissors, and the small vials were taken out of the samples. The samples were shredded with scissors, and immersed in acetone for 24 hours, followed by extracting the medicinal component. This extract was placed in a 10-ml volumetric flask, and adjusted to a constant volume with acetone, thereby preparing an extract sample for measurement by gas chromatography. For the internal standard solution, DMF was used. A tulobuterol calibration curve solution with a known concentration was also prepared for creating a calibration curve.

Each extract sample was measured by gas chromatography (GC-2010, Shimadzu Corporation) with a DB-5MS column (Agilent Technologies, Inc., length 30 m × inner diameter 0.25 mm × film thickness 0.25 µm), and the amount of adsorbed tulobuterol was calculated from the peak area ratio and a calibration curve. These operations were performed on three points of each sample, and the average of the three points was determined. A sample with an amount of adsorbed tulobuterol of less than 0.05 mg/64 cm² was determined as "A," and a sample with an amount of adsorbed tulobuterol of 0.05 mg/64 cm² or more was determined as "C." Table 1 illustrates the results.

### Tearability Evaluation Test

In accordance with the tearability evaluation JIS K-7128-2, each sample was trimmed into a piece (63 mm × 75 mm); and 16 pieces were laid on top of another, followed by evaluating the tearability with an Elmendorf tearing tester. The operation was performed on three points of each sample, and the average of the three points was determined. Taking into consideration the tearability of packaging sheets in practical use, a tearability of less than 50 g/16 pieces was determined as "A," and a tearability of 50 g/16 pieces or more was determined as "C." Table 1 illustrates the results.

**Table 1**

| | Primer Layer | Component of Low-Adsorption Coating Layer | Grammage of Low-Adsorption Coating Layer (g/m²) | Heat-Sealing Properties | Low-Adsorption Properties | Tearability |
|---|---|---|---|---|---|---|
| | Component Ratio | | | | | |
| Ex. 1 | Modified SBC 100% | COC | 0.5 | A | A | A |
| Ex. 2 | Modified SBC 100% | COC | 3 | A | A | A |
| Ex. 3 | Modified SBC 100% | COC | 10 | A | A | A |
| Ex. 4 | Modified SBC 70% | COC | 3 | A | A | A |
| | COC 30% | | | | | |
| Ex. 5 | Modified SBC 10% | COC | 3 | A | A | A |
| | COC 90% | | | | | |
| Ex. 6 | Modified SBC 70% | COC | 3 | A | A | A |
| | Polyolefin 30% | | | | | |
| Ex. 7 | Modified SBC 10% | COC | 3 | B | A | A |
| | Polyolefin 90% | | | | | |
| Ex. 8 | Modified SBC 100% | COP | 3 | A | A | A |
| Ex. 9 | Modified SBC 100% | COC | 15 | A | A | A |
| Com. Ex. 1 | - | PAN | - | A | A | C |
| Com. Ex. 2 | - | COC | - | A | A | C |
| Com. Ex. 3 | - | COP | - | A | A | C |
| Com. Ex. 4 | Modified SBC 100% | COC | 0.4 | A | C | A |
| Com. Ex. 5 | Non-Modified SBC 100% | COC | 3 | C | C | A |
| | | | | | Due to C in Sealing Properties | |
| Com. Ex. 6 | COC 100% | COC | 3 | C | C | A |
| | | | | | Due to C in Sealing Properties | |
| Com. Ex. 7 | Vinyl Chloride-Vinyl Acetate Copolymer | COC | 3 | C | C | A |
| | | | | | Due to C in Sealing Properties | |
| Com. Ex. 8 | Epoxy Resin | COC | 3 | C | C | A |
| | | | | | Due to C in Sealing Properties | |

| | | | | | | |
|---|---|---|---|---|---|---|
| (Note: "Ex." denotes Example, and "Com. Ex." denotes Comparative Example.) | | | | | | |

As illustrated in Table 1, the packaging material of each Example was excellent in heat-sealing properties and tearability, with less adsorption of the medicinal component, as compared with the packaging material of each Comparative Example.

### Description of the Reference Numerals

- 10.: Cycloolefin copolymer (COC)
- 20.: Primer layer
- 30.: Aluminum foil
- 40.: Adhesive layer
- 50.: Polyethylene terephthalate (PET) film
- 60.: Polyacrylonitrile (PAN)
- 62.: Adhesive layer
- 64.: Aluminum foil
- 66.: Adhesive layer
- 68.: Polyethylene terephthalate (PET) film

## Claims

1. A packaging material comprising, on or above one or both surfaces of a substrate, a primer layer and a low-adsorption coating layer with a grammage of 0.5 to 20 g/m² in this order, wherein
the primer layer contains
an acid-modified product of a block copolymer that contains a block A containing a structural unit derived from an aromatic vinyl compound and a block B containing a structural unit derived from a conjugated diene compound and/or
an acid-modified product of a hydrogenated product of the block copolymer; and
the low-adsorption coating layer contains a cyclic polyolefin.

2. The packaging material according to claim 1, wherein the cyclic polyolefin is at least one member selected from the group consisting of cycloolefin copolymers and cycloolefin polymers.

3. The packaging material according to claim 1 or 2, wherein the primer layer further contains a cyclic polyolefin.

4. A packaging pouch comprising the packaging material of any one of claims 1 to 3.

5. The packaging pouch according to claim 4, comprising a freely openable zipper portion.
